# EUROPÄISCHE PATENTSCHRIFT

(11) **EP 1 254 279 B1**
(45) Veröffentlichungstag und Bekanntmachung des Hinweises auf die Patenterteilung: **17.03.2004**
(21) Anmeldenummer: 01902356.3
(22) Anmeldetag: 27.01.2001
(51) Int. Cl.: C23F 11/173

(54) **KORROSIONSSCHUTZMITTEL UND KORROSIONSSCHUTZVERFAHREN FÜR METALLOBERFLÄCHEN**
ANTI-CORROSIVE AGENTS AND METHOD FOR PROTECTING METAL SURFACES AGAINST CORROSION
ANTICORROSIF ET PROCEDE DE PROTECTION CONTRE LA CORROSION DESTINE A DES SURFACES METALLIQUES

(30) Priorität: 07.02.2000 DE 10005113
(43) Veröffentlichungstag der Anmeldung: 06.11.2002
(73) Patentinhaber: Henkel Kommanditgesellschaft auf Aktien, 40589 Düsseldorf (DE)
(72) Erfinder: SCHENZLE, Bernd, 69118 Heidelberg (US); KOCH, Alina, Monica, 40225 Düsseldorf (DE)
(74) Vertreter: Endres, Helmut
(86) Internationale Anmeldenummer: PCT/EP2001/000885
(87) Internationale Veröffentlichungsnummer: WO 2001/059181

(56) Entgegenhaltungen:
- EP-A- 0 080 413
- DE-A- 4 030 523
- FR-A- 2 609 725
- US-A- 4 216 032
- US-A- 4 711 726

## Beschreibung

Die Erfindung liegt auf dem Gebiet der Korrosionsschutzbehandlung von Metalloberflächen. Ein Aspekt der Erfindung besteht darin, auf der blanken Metalloberfläche eine korrosionsschützende Schicht abzuscheiden. Ein zweiter Aspekt der Erfindung besteht darin, die korrosionsschützende Wirkung einer bereits auf der Metalloberfläche abgeschiedenen Korrosionsschutzschicht zu verstärken. Dabei liegt ein besonderes Merkmal der Erfindung darin, daß keine toxischen Schwermetalle wie beispielsweise Chrom oder Nickel verwendet werden müssen.

Für die Abscheidung korrosionsschützender Schichten auf blanken Metalloberflächen bzw. die Nachspülung bereits beschichteter Metalloberflächen zur Erhöhung des Korrosionsschutzes besteht ein umfangreicher Stand der Technik. Im folgenden sind einige Beispiele für Dokumente aufgeführt, die insbesondere die chromfreie Behandlung von Aluminiumoberflächen zum Gegenstand haben. Der hierbei gebrauchte Begriff "Konversionsbehandlung" sagt aus, daß Komponenten der Behandlungslösung mit der Metalloberfläche chemisch reagieren, wodurch eine Korrosionsschutzschicht entsteht, in die sowohl . Komponenten der Behandlungslösung als auch Metallatome aus der Metalloberfläche eingebaut sind.

Die chromfreie Konversionsbehandlung von Aluminiumoberflächen mit Fluoriden von Bor, Silicium, Titan oder Zirkonium allein oder in Verbindung mit organischen Polymeren ist zur Erzielung eines permanenten Korrosionsschutzes und zur Erzeugung einer Grundlage für eine anschließende Lackierung prinzipiell bekannt:
Die **US-A-5 129 967** offenbart Behandlungsbäder für eine No-Rinse-Behandlung (dort als "dried in place conversion coating" bezeichnet) von Aluminium, enthaltend
   a) 10 bis 16 g/l Polyacrylsäure oder deren Homopolymere,
   b) 12 bis 19 g/l Hexafluorozirkonsäure,
   c) 0,17 bis 0,3 g/l Fluorwasserstoffsäure und
   d) bis zu 0,6 g/l Hexafluorotitansäure.

**EP-B-8 942** offenbart Behandlungslösungen, vorzugsweise für Aluminiumdosen, enthaltend
a) 0,5 bis 10 g/l Polyacrylsäure oder eines Esters davon und
b) 0,2 bis 8 g /l an mindestens einer der Verbindungen H₂ZrF₆, H₂TiF₆ und H₂SiF₆, wobei der pH-Wert der Lösung unterhalb von 3,5 liegt,
sowie ein wäßriges Konzentrat zum Wiederauffrischen der Behandlungslösung enthaltend
a) 25 bis 100 g/l Polyacrylsäure oder eines Esters davon,
b) 25 bis 100 g/l von mindestens einer der Verbindungen H₂ZrF₆, H₂TiF₆ und H₂SiF₆, und
c) eine Quelle freier Fluoridionen, die 17 bis 120 g/l freies Fluorid liefert.

**DE-C-19 33 013** offenbart Behandlungsbäder mit einem pH-Wert oberhalb 3,5, die neben komplexen Fluoriden des Bors, Titans oder Zirkoniums in Mengen von 0,1 bis 15 g/l, bezogen auf die Metalle, zusätzlich 0,5 bis 30 g/l Oxidationsmittel, insbesondere Natriummetanitrobenzolsulfonat enthalten.

**DE-C-24 33 704** beschreibt Behandlungsbäder zur Erhöhung der Lackhaftung und des permanenten Korrosionsschutzes auf u.a. Aluminium, die 0,1 bis 5 g/l Polyacrylsäure oder deren Salze oder Ester sowie 0,1 bis 3,5 g/l Ammoniumfluorozirkonat, berechnet als ZrO₂, enthalten können. Die pH-Werte dieser Bäder können über einen weiten Bereich schwanken. Die besten Ergebnisse werden im allgemeinen erhalten, wenn der pH bei 6 - 8 liegt.

**US-A-4 992 116** beschreibt Behandlungsbäder für die Konversionsbehandlung von Aluminium mit pH-Werten zwischen etwa 2,5 und 5, die mindestens drei Komponenten enthalten:
a) Phosphationen im Konzentrationsbereich zwischen 1,1x10⁻⁵ bis 5,3x10⁻³ mol/l entsprechend 1 bis 500 mg/l,
b) 1,1x10⁻⁵ bis 1,3x10⁻³ mol/l einer Fluorosäure eines Elements der Gruppe Zr, Ti, Hf und Si (entsprechend je nach Element 1,6 bis 380 mg/l) und
c) 0,26 bis 20 g/l einer Polyphenolverbindung, erhältlich durch Umsetzung von Poly(vinylphenol) mit Aldehyden und organischen Aminen.

Dabei ist ein Molverhältnis zwischen der Fluorosäure und Phosphat von etwa 2,5 : 1 bis etwa 1 : 10 einzuhalten.

**DE-A-27 15 292** offenbart Behandlungsbäder für die chromfreie Vorbehandlung von Aluminiumdosen, die mindestens 10 ppm Titan und/oder Zirkon, zwischen 10 und 1000 ppm Phosphat und eine zur Bildung komplexer Fluoride des vorhandenen Titans und/oder Zirkons ausreichenden Menge Fluorid, mindestens jedoch 13 ppm, enthalten und pH-Werte zwischen 1,5 und 4 aufweisen.

**WO 92/07973** lehrt ein chromfreies Behandlungsverfahren für Aluminium, das als wesentliche Komponenten in saurer wäßriger Lösung 0,01 bis etwa 18 Gew.-% H₂ZrF₆ und 0,01 bis etwa 10 Gew.-% eines 3-(N-C₁₋₄alkyl-N-2-hydroxyethylaminomethyl)-4hydroxystyrol-Polymers verwendet. Fakultative Komponenten sind 0,05 bis 10 Gew.-% dispergiertes SiO₂, 0,06 bis 0,6 Gew.-% eines Lösevermittlers für das Polymer sowie Tensid.

Trotz dieses hier nur in Auszügen wiedergegebenen umfangreichen Stands der Technik besteht immer noch ein Bedarf nach verbesserten Mitteln und Verfahren zur Korrosionsschutzbehandlung von Metalloberflächen. Die Erfindung stellt sich die Aufgabe, neue Mittel und Verfahren hierfür zur Verfügung zu stellen, um das Angebot an verfügbaren Korrosionsschutzmitteln und -verfahren auszuweiten.

Die vorliegende Erfindung basiert auf der Erkenntnis, daß bestimmte Copolymere von Vinylpyrrolidon eine hervorragende Korrosionsschutzwirkung aufweisen. In einem ersten Aspekt betrifft die Erfindung ein Mittel zur Behandlung von Metalloberflächen enthaltend
a) 0,02 bis 200 g/l Phosphorsäure und/oder mindestens einer Fluorosäure eines oder mehrerer Elemente der Gruppe Zr, Ti, Hf und Si oder jeweils deren Anionen sowie
b) 0,05 bis 200 g/l eines Copolymers von Vinylpyrrolidon,
   ausgewählt aus der Gruppe der Copolymere von: Vinylpyrrolidon/Vinylacetat, Vinylpyrrolidon/Vinylcaprolactam, Vinylpyrrolidon/Vinylimidazol, VinylpyrrolidonNinylimidazoliummethylsulfat, Vinylpyrrolidon/Na-methacrylat, Vinylpyrrolidon/Dimethylaminoethylmethacrylat, Vinylpyrrolidon/Dimethylaminopropylmethacrylamid, Vinylpyrrolidon/Dimethylaminoethylmethacrylat-Ammoniumsalz, Vinylpyrrolidon/Vinylcaprolactam/Dimethylaminoethylmethacrylat, Vinylpyrrolidon/Methacrylamidopropyltrimethylammoniumchlorid, Vinylpyrrolidon/Styrol.

Dabei kann in einer Ausführungsform der Erfindung die Metalloberfläche zunächst einer Konversionsbehandlung nach dem Stand der Technik unterzogen werden, beispielsweise einer Zink- oder Eisenphosphatierung, einer Konversionsbehandlung mit Fluorosäuren von Metallen, beispielsweise von Titan, Zirkon oder Hafnium oder auch von Bor oder Silicium, oder einer Behandlung mit einer Lösung oder Suspension eines organischen Polymers, das keine Vinylpyrrolidoneinheiten enthält. Beispiele solcher Polymere sind in der einleitend zitierten Literatur erwähnt.

Eine alternative Ausführungsform der Erfindung besteht darin, daß die Metalloberfläche mit einem Copolymer von Vinylpyrrolidon in Kontakt gebracht wird, während sie einer Konversionsbehandlung unterzogen wird. In diesem Falle ist also ein Copolymer in der Behandlungslösung vorhanden, mit der auf der Metalloberfläche eine Konversionsschicht erzeugt wird. Die Behandlungslösung zum Erzeugen der Konversionsschicht kann beispielsweise Phosphorsäure oder deren Anionen enthalten. Weiterhin können in der Behandlungslösung zweiwertige Kationen wie beispielsweise Zink und/oder Mangan vorhanden sein. Ein besonderes Beispiel einer derartigen Behandlungslösung zum Erzeugen einer Konversionsschicht ist eine Zinkphosphatierlösung, die auf der Metalloberfläche eine kristalline Schicht von zinkhaltigen Metallphosphaten erzeugt. Die Behandlungslösung kann jedoch auch Phosphorsäure und/oder deren Anionen, jedoch keine zweiwertigen Metalle enthalten. Ein Beispiel hierfür ist eine Eisenphosphatierlösung, die auf einer Metalloberfläche, insbesondere einer eisenhaltigen Oberfläche, eine im wesentlichen nichtkristalline Schicht von Metallphosphaten und/oder Metalloxiden erzeugt. Die Anwesenheit von Copolymeren von Vinylpyrrolidon in einer derartigen Behandlungslösung verbessert den Korrosionsschutz, der durch die Konversionsschicht erzielt wird. Dies gilt auch, wenn die Behandlungslösung außer Copolymeren von Vinylpyrrolidon als Konversionsschichtbildende Komponente Fluorosäuren und/oder komplexe Fluoride von Metallen und Halbmetallen wie Bor, Silicium, Titan, Zirkon und/oder Hafnium enthält.

Ein besonderer Aspekt der Erfindung besteht darin, daß aufgrund der korrosionsschützenden Wirkung von Copolymeren von Vinylpyrrolidon auf hochtoxische Elemente in der Behandlungslösung wie beispielsweise Chrom oder Nickel verzichtet werden kann.

Unabhängig davon, auf welche Weise das Copolymer von . Vinylpyrrolidon mit der Metalloberfläche in Kontakt gebracht wird, ist es besonders vorzuziehen, daß man ein solches Copolymer von Vinylpyrrolidon einsetzt, das Caprolactamgruppen enthält. Möglicherweise zeigen diese Copolymere von Vinylpyrollidon aufgrund der Anwesenheit der Caprolactamgruppen eine erhöhte Reaktivität gegenüber Metallionen, so daß die Copolymere von Vinylpyrrolidon durch die Caprolactamgruppen bzw. deren Reaktionsprodukte mit der Metalloberfläche oder mit Bestandteilen einer bereits aufgebrachten Konversionsschicht besonders fest an die Metalloberfläche gebunden werden.

Bei Anwesenheit von Phosphorsäure stellt das Mittel zur Behandlung von Metalloberflächen eine Phosphatierlösung dar. Enthält diese keine Ionen zweiwertiger Metalle wie beispielsweise Zink und/oder Mangan, liegt sie als sogenannte "nichtschichtbildende" Phosphatierlösung, beispielsweise in Form einer Eisenphosphatierlösung vor. Zink und/oder Mangan enthaltende Phosphatierlösungen, die beispielsweise 0,3 bis 2 g/l Zinkionen und erwünschtenfalls zusätzlich oder anstelle hiervon etwa die gleiche Konzentration an Manganionen enthalten, sind auf dem Gebiet der Konversionsbehandlung als sogenannte "schichtbildende" Phosphatierlösungen bekannt. Zusammen mit Phosphorsäure oder an deren Stelle kann die Behandlungslösung auch eine oder mehrere Fluorosäuren eines oder mehrerer Elemente der Gruppe Zr, Ti, Hf und Si enthalten. Je nach eingestelltem pH-Wert der Lösung liegen sowohl Phosphorsäure als auch die genannten Fluorosäuren teilweise in Form ein- oder mehrfach negativ geladener Anionen vor. Das Verhältnis von Säureanionen zu undissozierter Säure hängt von der Protolysekonstante der jeweiligen Säure und von dem aktuell eingestellten pH-Wert ab. Diese Erscheinung ist allgemein als Säure-Base-Gleichgewicht bekannt.

Diese Mittel können als solche oder nach Verdünnung mit Wasser zur Behandlung von Metalloberflächen eingesetzt werden. Außer den genannten essentiellen Komponenten enthalten die Mittel Wasser sowie erwünschtenfalls weitere Wirkoder Hilfsstoffe zum Einstellen des pH-Werts, zur Erhöhung der Korrosionsschutzwirkung, zum Verbessern der Applizierbarkeit und möglicherweise für weitere Zwecke.

Auf dem betroffenen technischen Gebiet der Korrosionsschutzbehandlung von Metalloberflächen, insbesondere in Form einer Konversionsbehandlung, ist es üblich, Konzentrate zu vertreiben, aus denen am Ort der Anwendung durch Verdünnen mit Wasser und erforderlichenfalls Einstellen des pH-Wertes die anwendungsfertigen Behandlungslösungen zubereitet werden. Die prinzipiell mögliche Alternative, die Behandlungslösungen am Ort der Anwendung durch Auflösen der einzelnen Komponenten in Wasser im erwünschten Konzentrationsbereich herzustellen, wird von den Anwendern solcher Lösungen in der Regel als unpraktisch empfunden. Daher kann das erfindungsgemäße Mittel als Konzentrat vorliegen, das
a) 0,2 bis 200 g/l Phosphorsäure und/oder mindestens einer Fluorosäure eines oder mehrerer Elemente der Gruppe Zr, Ti, Hf und Si oder jeweils deren Anionen sowie
b) 0,5 bis 200 g/l eines der genannten Copolymere von Vinylpyrrolidon enthält. Durch Verdünnen mit Wasser und ggf. Einstellen des pH-Werts lassen sich hieraus die anwendungsfertigen Lösungen herstellen, die mit den Metalloberflächen in Kontakt gebracht werden. Der Verdünnungsfaktor liegt dabei in der Regel im Bereich von etwa 10 bis etwa 200.

In einem weiteren Aspekt der Erfindung liegt das Mittel bereits als gebrauchsfertige Anwendungslösung vor, die
a) 0,02 bis 20 g/l Phosphorsäure und/oder mindestens einer Fluorosäure eines oder mehrerer Elemente der Gruppe Zr, Ti, Hf und Si oder jeweils deren Anionen sowie
b) 0,05 bis 20 g/l eines der genannten Copolymere von Vinylpyrrolidon enthält.

Diese Anwendungslösung kann durch das Verdünnen des vorstehend beschriebenen Konzentrats erhalten werden. Je nach spezieller Zusammensetzung kann es sein, daß Konzentrate, die bereits alle Wirkstoffe enthalten, nicht hinreichend lange lagerstabil sind. In diesen Fällen ist es vorzuziehen, die Konzentrate in mindestens zwei Komponenten aufzuteilen, die jeweils ausgewählte Komponenten des anwendungsfertigen Korrosionsschutzmittels enthalten. Beispielsweise kann es empfehlenswert sein, daß eine Komponente des Konzentrats zumindest überwiegend die anorganischen Bestandteile des Mittels enthält, während zumindest eine andere Komponente des Konzentrats die organischen Polymeren enthält. Die beiden Komponenten des Konzentrats können dann unterschiedliche pH-Werte aufweisen, wodurch die Lagerstabilität der Konzentratkomponenten erhöht werden kann. Zum Herstellen bzw. zum Auffrischen des Mittels in seiner Anwendungsform werden die einzelnen Komponenten des Konzentrats mit Wasser so weit verdünnt, daß die Wirkstoffe im erwünschten Konzentrationsbereich vorliegen. Dabei kann es erforderlich werden, den pH-Wert durch Zugabe einer Säure bzw. einer Lauge auf den gewünschten Bereich einzustellen.

Bevorzugte Konzentrationsbereiche für die Wirkstoffe a) und b) in der Anwendungslösung sind: Im Falle von Phosphorsäure bzw. Phosphationen 5 bis 20 g/l, insbesondere 8 bis 16 g/l Phosphationen, im Falle der Fluorosäuren eine derartige Menge, daß Zr, Ti, Hf und/oder Si bezogen auf diese Elemente in einer Konzentration im Bereich zwischen 20 und 1 000 mg/l, insbesondere 50 bis 400 mg/l vorliegen. Die Konzentration der Copolymere von Vinylpyrrolidon. in der Anwendungslösung liegt in dem Fall, daß die Anwendungslösung mit einer blanken Metalloberfläche in Kontakt gebracht wird, vorzugsweise im Bereich von 50 bis 2000 mg/l, vorzugsweise im Bereich von 80 bis 1 000 mg/l und insbesondere im Bereich von 100 bis 800 mg/l. Setzt man die Anwendungslösung zur Nachbehandlung nach einer Konversionsbehandlung ein, enthält sie vorzugsweise 1 bis 5 g/l, insbesondere 2 bis 4 g/l Copolymere von Vinylpyrrolidon.

Als Copolymere von Vinylpyrrolidon kommen die in Tabelle 1 aufgelisteten Polymere der dort angeführten Monomere in Betracht.

**Tabelle 1:**

| Copolymere von Vinylpyrrolidon | |
|---|---|
| **Bezeichnung** | **Handelsname bzw. Hersteller** |
| | |
| Vinylpyrrolidon/Vinylacetat | Luviskol^{R}, BASF / ISP |
| Vinylpyrrolidon/Vinylcaprolactam | Luvitec^{R}, BASF |
| Vinylpyrrolidon/Vinylimidazol | Luvitec^{R}, BASF |
| Vinylpyrrolidon/Vinylimidazoliummethylsulfat | Luvitec, BASF |
| Vinylpyrrolidon/Na-methacrylat | Luvitec^{R}, BASF |
| | |
| Vinylpyrrolidon/Dimethylaminoethylmethacrylat | ISP^{R} |
| Vinylpyrrolidon/Dimethylaminopropylmethacrylamid | ISP^{R}, Styleze |
| Vinylpyrrolidon/Dimethylaminoethylmethacrylat Ammoniumsalz | ISP^{R}, Gafquat |
| Vinylpyrrolidon/Vinylcaprolactam/Dimethylaminoethylmethacrylat | ISP^{R} |
| Vinylpyrrolidon/Methacrylamidopropyltrimethylammoniumchlorid | ISP^{R}, Gafquat |
| Vinylpyrrolidon/Vinylcaprolactam/Dimethylaminoethylmethacrylat | ISP^{R}, Advantage |
| Vinylpyrrolidon/Styrol | ISP^{R}, Antara |

Die erfindungsgemäßen Mittel können zur Erhöhung des Korrosionsschutzes weitere Übergangsmetallionen wie beispielsweise Ionen der Elemente Zink, Mangan, Cer oder Vanadium oder auch Flußsäure bzw. freie Fluoride enthalten. Auch die Gegenwart von Chrom- oder Nickelionen kann prinzipiell Vorteile bieten. Aus Gründen des Arbeits- und Umweltschutzes verzichtet man jedoch vorzugsweise auf den Zusatz von Chrom- oder Nickelionen. Demgemäß besteht eine bevorzugte Ausführungsform der Erfindung darin, daß das Mittel frei ist von Nickel und Chrom. Dies bedeutet, daß diese Metalle bzw. ihre Verbindungen dem Mittel nicht absichtlich zugesetzt werden. Es ist jedoch nicht auszuschließen, daß aus dem Behältermaterial oder aus den zu behandelnden Oberflächen wie beispielsweise Stahllegierungen Ionen von Nickel und/oder Chrom in geringer Konzentration in das Mittel (die Behandlungslösung) gelangen. Jedoch wird in der Praxis erwartet, daß die Konzentrationen von Nickel und/oder Chrom in der anwendungsfertigen Behandlungslösung nicht höher als etwa 10 ppm sind.

Das erfindungsgemäße Mittel weist in Form der gebrauchsfertigen Anwendungslösung vorzugsweise einen pH-Wert im Bereich von 1 bis 6 und insbesondere im Bereich von 2 bis 5,5 auf. Dies bedeutet, daß die Fluorosäuren der Elemente Zr, Ti, Hf oder Si je nach pH-Wert und Protolysekonstanten teilweise in Form der freien Säuren, teilweise jedoch in Form ihrer Säureanionen vorliegen. Daher ist es unerheblich, ob diese Fluorosäuren als solche oder in Form ihrer Salze eingesetzt werden. Weiterhin können säurelösliche Verbindungen von Zr, Ti, Hf oder Si sowie Flußsäure oder lösliche Fluoride getrennt zugegeben werden, da sich hieraus die Fluoroanionen der genannten Elemente bilden. Je nach Einsatzart muß der pH-Wert durch Zugabe von Säure wie beispielsweise die freien Fluorosäuren der genannten Elemente, jedoch beispielsweise auch Flußsäure, Schwefelsäure, Salpetersäure oder Phosphorsäure oder durch Zugabe einer Base wie beispielsweise Alkalimetallcarbonatlösung, Alkalimetallhydroxidlösung oder Ammoniak auf den erwünschten Bereich eingestellt werden.

Wegen der vorstehend bereits beschriebenen besonders guten Korrosionsschutzwirkung von Copolymeren von Vinylpyrrolidon, die Caprolactamgruppen enthalten, enthält das erfindungsgemäße Mittel in einer speziellen Ausführungsform Copolymere von Vinylpyrrolidon, die Caprolactamgruppen enthalten.

Ein weiterer Aspekt der Erfindung liegt in einem Verfahren zur Behandlung von Metalloberflächen, wobei man die Metalloberflächen, die erwünschtenfalls bereits eine Korrosionsschutzschicht tragen können, mit dem vorstehend beschriebenen Mittel in Form seiner gebrauchsfertigen Anwendungslösung in Berührung bringt. Die Metalloberflächen können beispielsweise ausgewählt sein aus Oberflächen von Stahl, verzinktem Stahl (elektrolytisch oder schmelztauchverzinkt), legierungsverzinktem Stahl, Aluminium oder Magnesium. Dabei liegen die Metalle Aluminium und Magnesium in der Regel nicht in reiner Form, sondern als Legierungen mit anderen Elementen wie beispielsweise Lithium, Zink, Kupfer, Silicium, Magnesium (im Falle von Aluminiumlegierungen) oder Aluminium (im Falle von Magnesiumlegierungen) vor. Insbesondere ist das Verfahren zur Behandlung von Oberflächen solcher Metalle konzipiert, die im Fahrzeugbau, in der Haushaltsgeräteindustrie, im Architektur- oder Einrichtungsbereich verwendet werden.

Dabei können solche Metalloberflächen behandelt werden, die noch keine Korrosionsschutzschicht aufweisen. Durch das erfindungsgemäße Behandlungsverfahren wird dann eine korrosionsschützende Beschichtung erzeugt, die gleichzeitig die Haftung eines ggf. später aufzubringenden organischen Überzugs wie beispielsweise eines Lacks verbessert. Es können jedoch auch solche Metalloberflächen mit dem erfindungsgemäßen Verfahren behandelt werden, die bereits eine vorgebildete Korrosionsschutzschicht aufweisen. In diesem Falle wird die Korrosionsschutzwirkung dieser bereits aufgebrachten Korrosionsschutzschicht weiter verbessert. Beispielsweise eignet sich das erfindungsgemäße Verfahren zur Nachbehandlung von . Metalloberflächen, die eine röntgenamorphe oder kristalline Beschichtung aufweisen, wie sie beispielsweise durch eine nichtschichtbildende oder eine schichtbildende Phosphatierung, beispielsweise eine schichtbildende Zinkphosphatierung, erzeugt werden. Die erfindungsgemäße Behandlung derartig vorbehandelter Metalloberflächen führt dazu, daß bei der Vorbehandlung verbliebene Poren in der ersten Korrosionsschutzschicht geschlossen werden.

Bei dem erfindungsgemäßen Behandlungsverfahren können die Metalloberflächen beispielsweise durch Aufspritzen oder Eintauchen mit der Behandlungslösung in Kontakt gebracht werden. In diesem Falle sieht man vorzugsweise vor, daß die Behandlungslösung nach einer Einwirkungsdauer, die beispielsweise im Bereich zwischen 30 Sekunden und 5 Minuten liegen kann, mit Wasser abgespült wird. Alternativ kann die Behandlungslösung mit der Metalloberfläche im sogenannten No-Rinse-Verfahren in Kontakt gebracht werden. Hierbei wird die Behandlungslösung entweder auf die Metalloberfläche aufgesprüht oder durch Auftragswalzen auf die Oberfläche übertragen. Danach erfolgt nach einer Einwirkungsdauer, die beispielsweise im Bereich von 2 bis 20 Sekunden liegen kann, ohne weitere Zwischenspülung ein Eintrocknen der Behandlungslösung. Dies kann beispielsweise in einem beheizten Ofen erfolgen.

Für das erfindungsgemäße Behandlungsverfahren weist die Behandlungslösung vorzugsweise einen pH-Wert im Bereich von 1 bis 6 auf, wobei je nach Substrat und Applikationsart sowie Einwirkungsdauer engere pH-Bereiche bevorzugt sein können. Beispielsweise stellt man den pH-Wert zur Behandlung blanker Metalloberflächen vorzugsweise auf den Bereich von 2 bis 6, bei Behandlung von Aluminiumoberflächen insbesondere auf den Bereich von 2 bis 4; bei Behandlung von Stahl, Zink oder verzinktem Stahl insbesondere auf den Bereich von 3 bis 5 ein. Bereits vorbehandelte Metalloberflächen, die beispielsweise eine Phosphatschicht tragen, werden vorzugsweise mit einer Behandlungslösung mit einem pH-Wert im Bereich von 3,5 bis 5 in Kontakt gebracht. Die Temperatur der Behandlungslösung bei der Ausführung des erfindungsgemäßen Verfahrens kann allgemein zwischen dem Gefrierpunkt und dem Siedepunkt der Behandlungslösung liegen, wobei aus praktischen Gründen Temperaturen im Bereich der Raumtemperatur oder darüber bevorzugt sind. Beispielsweise kann die Behandlungslösung eine Temperatur im Bereich von 15 bis 60 °C und insbesondere von 20 bis 45 °C aufweisen.

Das erfindungsgemäße Behandlungsverfahren stellt einen Teilschritt in einer ansonsten auf dem betroffenen Gebiet üblichen Abfolge von Verfahrensschritten dar. Beispielsweise werden die zu behandelnden Metalloberflächen üblicherweise vor der erfindungsgemäßen Behandlung mit einer üblichen Reinigungslösung gereinigt. Der Reinigungsschritt kann jedoch entfallen, wenn die zu behandelnden Metalloberflächen unmittelbar vor der erfindungsgemäßen Behandlung beschichtet, beispielsweise verzinkt, oder einer Konversionsbehandlung, beispielsweise einer Phosphatierung, unterzogen wurden. Nach der erfindungsgemäßen Behandlungsstufe werden die Metalloberflächen üblicherweise mit einem organischen Überzug, beispielsweise einem Lack versehen. Die kann beispielsweise ein Pulverlack oder ein elektrolytisch, insbesondere kathodisch, abscheidbarer Tauchlack sein.

### Ausführungsbeispiele

Das erfindungsgemäße Behandlungsverfahren wurde im Vergleich zu einem kommerziell eingesetzten Verfahren gemäß Stand der Technik an kaltgewalztem Stahl (CRS) sowie an Aluminium (Legierung AC 120) erprobt. Die Verfahrensschritte im einzelnen:

### Beispiel 1: CRS

1. Reinigung mit einem alkalischen Reiniger (Ridoline^{R} 1559, 2 %ig, und Ridosol^{R} 1270, 0,2 %ig (Henkel KGaA), 5 Minuten, 55 °C)
2. Spülen mit vollentsalztem Wasser
3. erfindungsgemäße Konversionsbehandlung, wobei zwei Konzentrate mit einer Zusammensetzung gemäß Tabelle 2 mit Wasser im Gewichtsverhältnis 1 : 200 verdünnt wurden. pH-Wert: 4, Temperatur: 30 °C, Behandlungsdauer im Tauchen 150 Sekunden.
4. Trocknen mit Preßluft ohne Zwischenspülung
5. Beschichtung mit einem bleifreien Elektrotauchlack (Cathogard^{R} 310, BASF)

### Vergleichsbeispiel 1

Behandlung wie vorstehend beschrieben, wobei jedoch im Schritt 3 anstelle des Vinylpyrrolidon/Vinylcaprolactam-Polymers 250 ppm Poly[(5-vinyl-2-hydroxy)-N-benzyl-N-methyl-glucamin] verwendet wurde.

**Tabelle 2:**

| Zusammensetzung der Konzentrate vor dem Verdünnen im Teilschritt 3 (Gew.-%) | |
|---|---|
| Anorganik: | |
| Wasser | 88 Gew.-% |
| Hexafluorotitansäure 50 %ig | 10 Gew.-% |
| amorphes SiO₂ | 0,5 Gew.-% |
| Zr-Carbonat-hydroxid-oxid 40 %ig | 1,5 Gew.-% |

| Organik: | |
|---|---|
| Wasser | 95 Gew.-% |
| Vinylpyrrolidon/Vinylcaprolactam-Copolymer | 5 Gew.-% |

Die wie vorstehend behandelten Probebleche aus CRS wurden einem Wechselklimatest gemäß der im Automobilbau üblichen Prüfvorschrift VDA 621415 über 10 Runden unterzogen. Zusätzlich wurde die Lackhaftung gemäß einem ebenfalls im Fahrzeugbau üblichen Steinschlagtest gemäß VW-Prüfvorschrift 3.17.10 ermittelt. Tabelle 3 enthält die Werte für die Lackunterwanderung (halbe Ritzbreite) sowie die Prüfnote für den Steinschlagtest (K-Wert: 1 = beste Lackhaftung, 10 = schlechteste Lackhaftung).

### Ausführungsbeispiel 2

### Substrat: Aluminiumlegierung AC 120

Die Probebleche wurden folgender Prozeßfolge unterzogen:
1. Reinigung mit einem alkalischen Reiniger (Ridoline^{R} 124, 2 %ig, und Ridoline^{R} 120 WX, 0,1 %ig (Henkel KGaA), 5 Minuten, 55 °C)
2. Spülung mit vollentsalztem Wasser
3. Spülung mit vollentsalztem Wasser
4. Konversionsbehandlung entsprechend dem Teilschritt 3 aus Beispiel 1, wobei der pH-Wert jedoch auf 2,5 eingestellt wurde.
5. Trocknen mit Preßluft ohne Zwischenspülung
6. Beschichtung mit einem bleifreien kathodischen Elektrotauchlack (Cathogard^{R} CG 310, BASF).

### Vergleichsbeispiel 2

Prozeßfolge gemäß Ausführungsbeispiel 2, wobei jedoch im Teilschritt 4 anstelle des Vinylpyrrolidon/Vinylcaprolactam-Polymers 250 ppm Poly[(5-vinyl-2-hydroxy)-N-benzyl-N-methyl-glucamin] eingesetzt wurde.

Die Probebleche wurden einem mit Essigsäure und Kupfer beschleunigtem Salzsprühtest nach Deutscher Norm DIN 50021 mit einer Testdauer von 10 Tagen unterzogen. Anschließend wurden Lackunterwanderung und Lackhaftung entsprechend Ausführungsbeispiel 1 bestimmt. Die Ergebnisse sind in Tabelle 3 enthalten.

**Tabelle 3:**

| Lackunterwanderung (halbe Ritzbreite) und Lackhaftung (K-Wert) | | |
|---|---|---|
| **Versuch** | **Lackunterwanderung (mm)** | **K-Wert** |
| Beispiel 1 | 1,7 | 6,5 |
| Vergleich 1 | 8,7 | 10 |
| Beispiel 2 | 0,4 | 7 |
| Vergleich 2 | 0,5 | 8 |

### Weitere Ausführungsbeispiele

### Beispiel 3: Schmelztauchverzinkter Stahl (HDG)

1. Reinigung mit einem alkalischen Reiniger (Ridoline^{R} 1559, 2 %ig, und Ridosol^{R} 1270, 0,2 %ig (Henkel KGaA), 5 Minuten, 55 °C)
2. Spülen mit vollentsalztem Wasser
3. Erfindungsgemäße Konversionsbehandlung, wobei zwei Konzentrate mit einer Zusammensetzung gemäß Tabelle 4 mit Wasser im Gewichtsverhältnis 1 : 200 verdünnt wurden. pH-Wert: 4, Temperatur: 30 °C, Behandlungsdauer im Tauchen 150 Sekunden.
4. Trocknen mit Preßluft ohne Zwischenspülung
5. Beschichtung mit einem bleifreien Elektrotauchlack (Cathogard^{R} 310, BASF)

### Vergleichsbeispiel 3

Behandlung wie vorstehen beschrieben, wobei jedoch im Schritt 3 anstelle des Vinylpyrrolidon/Vinylimidazol-Copolymers 250 ppm Poly[(5-vinyl-2-hydroxy)-N-benzyl-N-methyl-glucamin] verwendet wurde.

### Beispiel 4: Elektrolytisch verzinkter Stahl (EG)

Die Probebleche wurden der gleichen Prozeßfolge wie im Beispiel 3 beschrieben unterzogen.

### Vergleichsbeispiel 4

Behandlung wie im Vergleichsbeispiel 3 beschrieben, wobei es sich jetzt um EG Substrate handelt.

**Tabelle 4:**

| Zusammensetzung der Konzentrate vor dem Verdünnen im Vorbehandlungsschritt 3 der Beispiele 3 und 4 | |
|---|---|
| Anorganik: | |
| Wasser | 88 Gew.-% |
| Hexafluorotitansäure 50 %ig | 10 Gew.-% |
| amorphes SiO₂ | 0,5 Gew.-% |
| Zr-Carbonat-hydroxyd-oxid 40 %ig | 1,5 Gew.-% |

| Organik: | |
|---|---|
| Wasser | 95 Gew.-% |
| Vinylpyrrolidon/Vinylimidazol-Copolymers | 5 Gew.-% |

### Beispiel 5: HDG

1. Reinigung mit einem alkalischen Reiniger (Ridoline^{R} 1559, 2 %ig, und Ridosol^{R} 1270, 0,2 %ig (Henkel KGaA), 5 Minuten, 55 °C)
2. Spülen mit vollentsalztem Wasser
3. Erfindungsgemäße Konversionsbehandlung, wobei zwei Konzentrate mit einer Zusammensetzung gemäß Tabelle 5 mit Wasser im Gewichtsverhältnis 1 : 80 für die Anorganik bzw. 1 : 200 für die Organik verdünnt wurden. pH-Wert: 4, Temperatur: 30 °C, Behandlungsdauer im Tauchen 150 Sekunden.
4. Trocknen mit Preßluft ohne Zwischenspülung
5. Beschichtung mit einem bleifreien Elektrotauchlack (Cathogard^{R} 310, BASF)

### Vergleichsbeispiel 5

Behandlung wie vorstehen beschrieben, wobei jedoch im Schritt 3 anstelle des Vinylpyrrolidon/ 3-Methyl-1-Vinylimidazolium-methylsulfat-Copolymer 750 ppm Polyacrylsäure 25 %ig verwendet wurde.

### Beispiel 6: EG

Die Probebleche wurden der gleichen Prozeßfolge wie im Beispiel 5 beschrieben unterzogen.

### Vergleichsbeispiel 6

Behandlung wie im Vergleichsbeispiel 5 beschrieben, wobei es sich jetzt um EG Substrate handelt.

**Tabelle 5:**

| Zusammensetzung der Konzentrate vor dem Verdünnen im Vorbehandlungsschritt 3 | |
|---|---|
| Anorganik: | |
| Wasser | 84,6 Gew.-% |
| Hexafluorozirkonsäure 45 %ig | 15,4 Gew.-% |

| Organik: | |
|---|---|
| Wasser | 95 Gew.-% |
| Vinylpyrrolidon/ 3-Methyl-1-Vinylimidazolium-methylsulfat-Copolymer | 5 Gew.-% |

Die Probebleche wurden im Salzsprühtest nach Deutscher Norm DIN 50021 mit einer Testdauer von 21 Tagen unterzogen. Zusäzlich wurde die Lackhaftung gemäß VW-Prüfvorschrift 3.17.10 ermitelt. Anschließend wurden Lackunterwanderung und Lackhaftung bestimmt. Die Ergebnisse sind in Tabelle 6 zusammengefasst.

**Tabelle 6:**

| Lackunterwanderung (halbe Ritzbreite) und Lackhaftung (K-Wert) | | |
|---|---|---|
| **Versuch** | **Lackunterwanderung (mm)** | **K-Wert** |
| Beispiel 3. | 3,5 | 7,5 |
| Vergleich 3 | 4,2 | 7,5 |
| Beispiel 4 | 4,2 | 7,5 |
| Vergleich 4 | 5,0 | 8,0 |
| Beispiel 5 | 3,2 | 7,5 |
| Vergleich 5 | 4,8 | 9,5 |
| Beispiel 6 | 5,1 | 7,0 |
| Vergleich 6 | 6,2 | 9,5 |

### Beispiel 7: CRS: Nachbehandlung nach einer schichtbildenden Zinkphosphatierung

1. Reinigung mit einem alkalischen Reiniger (Ridoline^{R} 1250i, 2 %ig, Henkel KGaA), 10 Minuten, 60 °C)
2. Spülen mit vollentsalztem Wasser
3. Aktivieren (Fixodine^{R} 9112, 1g/l, Henkel KGaA), 1 Minute, Raumtemperatur
4. Nickelfreie Zinkphosphatierung (Granodine^{R} 2748, 5,2 %ig, Henkel KGaA), 3 Minuten, 54 °C
5. Spülen mit vollentsalztem Wasser
6. Erfindungsgemäßige Nachpassivierung, wobei das Konzentrat mit einer Zusammensetzung gemäß Tabelle 7 mit Wasser im Gewichtsverhältnis 1 : 16 verdünnt wurde. Raumtemperatur, Behandlungsdauer im Tauchen 60 Sekunden.
7. Spülen mit vollentsalztem Wasser
8. Trocknen mit Preßluft
9. Beschichtung mit einem bleifreien Elektrotauchlack (Cathogard^{R} 310, BASF)

**Tabelle 7:**

| Zusammensetzung des Konzentrates vor dem Verdünnen im Nachpassivierungsschritt 6 | |
|---|---|
| Wasser | 95 Gew.-% |
| Vinylpyrrolidon/Vinylcaprolactam-Copolymer | 5 Gew.-% |

### Vergleichsbeispiel 7

1. Reinigung mit einem alkalischen Reiniger (Ridoline^{R} 1250i, 2 %ig, Henkel KGaA), 10 Minuten, 60 °C)
2. Spülen mit vollentsalztem Wasser
3. Aktivieren ( Fixodine^{R} 9112, 1g/l, Henkel KGaA), 1 Minute, Raumtemperatur
4. Nickelfreie Zinkphosphatierung (Granodine^{R} 2748, 5,2 %ig, Henkel KGaA), 3 Minuten, 54 °C
5. Spülen mit vollentsalztem Wasser
6. Chromfreie Nachpassivierung nach Stand der Technik auf Basis Hexafluorozirkonat, (Deoxylyte^{R} 54 NC, 0,255 %ig, Henkel KGaA), Raumtemperatur, Behandlungsdauer im Tauchen 60 Sekunden.
7. Spülen mit vollentsalztem Wasser
8. Trocknen mit Preßluft
9. Beschichtung mit einem bleifreien Elektrotauchlack (Cathogard^{R} 310, BASF)

Die wie vorstehend behandelten Probebleche aus CRS wurden einem Wechselklimatest gemäß der im Automobilbau üblichen Prüfvorschrift VDA 621415 70 Tagen unterzogen. Zusäzfich wurde die Lackhaftung gemäß VW-Prüfvorschrift 3.17.10 ermitelt. Tabelle 8 enthält die Werte für die Lackunterwanderung sowie die Prüfnote für den Steinschlagtest (K-Wert: 1 = beste Lackhaftung, 10 = schlechteste Lackhaftung).

**Tabelle 8:**

| Lackunterwanderung (halbe Ritzbreite) und Lackhaftung (K-Wert) | | |
|---|---|---|
| **Versuch** | **Lackunterwanderung (mm)** | **K-Wert** |
| Beispiel 7 | 1,5 | 7 |
| Vergleich 7 | 2,5 | 8 |

## Patentansprüche

1. Mittel zur Behandlung von Metalloberflächen enthaltend
a) 0,02 bis 200 g/l Phosphorsäure und/oder mindestens einer Fluorosäure eines oder mehrerer Elemente der Gruppe Zr, Ti, Hf und Si oder jeweils deren Anionen sowie
b) 0,05 bis 200 g/l eines Copolymers von Vinylpyrrolidon,
ausgewählt aus der Gruppe der Copolymere von: Vinylpyrrolidon/Vinylacetat, Vinylpyrrolidon/Vinylcaprolactam, Vinylpyrrolidon/Vinylimidazol, Vinylpyrrolidon/Vinylimidazoliummethylsulfat, Vinylpyrrolidon/Na-methacrylat, Vinylpyrrolidon/Dimethylaminoethylmethacrylat, Vinylpyrrolidon/Dimethylaminopropylmethacrylamid, Vinylpyrrolidon/Dimethylaminoethylmethacrylat-Ammoniumsalz, Vinylpyrrolidon/Vinylcaprolactam/Dimethylaminoethylmethacrylat, Vinylpyrrolidon/Methacrylamidopropyltrimethylammoniumchlorid, Vinylpyrrolidon/Styrol.

2. Mittel nach Anspruch 1, **dadurch gekennzeichnet, daß** das Copolymer von Vinylpyrrolidon Caprolactamgruppen enthält.

3. Mittel nach einem oder beiden der Ansprüche 1 und 2, **dadurch gekennzeichnet, daß** es frei ist von Nickel und Chrom.

4. Mittel nach einem oder mehreren der Ansprüche 1 bis 3, **dadurch gekennzeichnet, daß** es als Konzentrat vorliegt, das
a) 0,2 bis 200 g/l Phosphorsäure und/oder mindestens einer Fluorosäure eines oder mehrerer Elemente der Gruppe Zr, Ti, Hf und Si oder jeweils deren Anionen sowie
b) 0,5 bis 200 g/l eines der genannten Copolymere von Vinylpyrrolidon enthält.

5. Mittel nach einem oder mehreren der Ansprüche 1 bis 3, **dadurch gekennzeichnet, daß** es als gebrauchsfertige Anwendungslösung vorliegt, die
a) 0,02 bis 20 g/l Phosphorsäure und/oder mindestens einer Fluorosäure eines oder mehrerer Elemente der Gruppe Zr, Ti, Hf und Si oder jeweils deren Anionen sowie
b) 0,05 bis 20 g/l eines der genannten Copolymere von Vinylpyrrolidon enthält.

6. Mittel nach Anspruch 5, **dadurch gekennzeichnet, daß** es einen pH-Wert im Bereich von 1 bis 6 aufweist.

7. Verfahren zur Behandlung von Metalloberflächen, **dadurch gekennzeichnet, daß** man die Metalloberflächen, die erwünschtenfalls bereits eine Korrosionsschutzschicht tragen können, mit einem Mittel nach einem oder beiden der Ansprüche 5 und 6 in Kontakt bringt.

8. Verfahren nach Anspruch 7, **dadurch gekennzeichnet, daß** die Metalloberfläche nach einer Konversionsbehandlung mit einem Mittel nach einem oder beiden der Ansprüche 5 und 6 in Kontakt gebracht wird.

9. Verfahren nach Anspruch 7, **dadurch gekennzeichnet, daß** die Metalloberfläche mit einem Mittel nach einem oder beiden der Ansprüche 5 und 6 in Kontakt gebracht wird, während sie einer Konversionsbehandlung unterzogen wird.

## Claims

1. An agent for treating metal surfaces containing
a) 0.02 to 200 g/l of phosphoric acid and/or at least one fluoric acid of one or more elements from the group comprising Zr, Ti, Hf and Si or the respective anions thereof, as well as
b) 0.05 to 200 g/l of a copolymer of vinylpyrrolidone, selected from the group of copolymers of:
vinylpyrrolidone/vinyl acetate,
vinylpyrrolidone/vinylcaprolactam,
vinylpyrrolidone/vinylimidazole,
vinylpyrrolidone/vinylimidazolium methylsulfate,
vinylpyrrolidone/Na methacrylate,
vinylpyrrolidone/dimethylaminoethyl methacrylate,
vinylpyrrolidone/dimethylaminopropylmethacrylamide,
vinylpyrrolidone/dimethylaminoethyl methacrylate ammonium salt,
vinylpyrrolidone/vinylcaprolactam/dimethylaminoethyl methacrylate,
vinylpyrrolidone/methacrylamidopropyltrimethyl ammonium chloride,
vinylpyrrolidone/styrene.

2. An agent according to claim 1, **characterised in that** the copolymer of vinylpyrrolidone contains caprolactam groups.

3. An agent according to one or both of claims 1 and 2, **characterised in that** it is free from nickel and chromium.

4. An agent according to one or more of claims 1 to 3, **characterised in that** it is present as a concentrate containing
a) 0.2 to 200 g/l of phosphoric acid and/or at least one fluoric acid of one or more elements from the group comprising Zr, Ti, Hf and Si or the respective anions thereof, as well as
b) 0.5 to 200 g/l of one of the above-mentioned copolymers of vinylpyrrolidone.

5. An agent according to one or more of claims 1 to 3, **characterised in that** it is present as a ready-to-use application solution containing
a) 0.02 to 20 g/l of phosphoric acid and/or at least one fluoric acid of one or more elements from the group comprising Zr, Ti, Hf and Si or the respective anions thereof, as well as
b) 0.05 to 20 g/l of one of the above-mentioned copolymers of vinylpyrrolidone.

6. An agent according to claim 5, **characterised in that** it has a pH value in the range of from 1 to 6.

7. A process for treating metal surfaces, **characterised in that** the metal surfaces which, if desired, may already carry an anticorrosive layer, are brought into contact with an agent according to one or both of claims 5 and 6.

8. A process according to claim 7, **characterised in that** the metal surface is brought into contact with an agent according to one or both of claims 5 and 6 after a conversion treatment.

9. A process according to claim 7, **characterised in that** the metal surface is brought into contact with an agent according to one or both of claims 5 and 6, while it is being subjected to a conversion treatment.

## Revendications

1. Agent de traitement des surfaces métalliques, contenant :
a) de 0,02 à 200 g/l d'acide phosphorique et/ou d'au moins un acide fluoré d'un ou plusieurs éléments du groupe Zr, Ti, Hf et Si ou respectivement de leurs anions, ainsi que
b) de 0,05 à 200 g/l d'un copolymère de vinylpyrrolidone,
choisi dans le groupe des copolymères de : vinylpyrrolidone/acétate de vinyle, vinylpyrrolidonelvinylcaprolactame, vinylpyrrolidone/vinylimidazole, vinylpyrrolidone/méthylsulfate de vinylimidazolium, vinylpyrrolidone/méthacrylate de sodium, vinylpyrrolidone/méthacrylate de diméthylaminoéthyle, vinylpyrrolidone/diméthylaminopropylméthacrylamide, vinylpyrrolidone/sel d'ammonium de méthacrylate de diméthylaminoéthyle, vinylpyrrolidone/vinylcaprolactame/méthacrylate de diméthylaminoéthyle, vinylpyrrolidone/chlorure de méthacrylamidopropyltriméthylammonium, vinylpyrrolidone/styrène.

2. Agent selon la revendication 1, **caractérisé en ce que** le copolymère de vinylpyrrolidone contient des groupes caprolactame.

3. Agent selon l'une des revendications 1 et 2, ou les deux, **caractérisé en ce qu'**il est dépourvu de nickel et de chrome.

4. Agent selon une ou plusieurs des revendications 1 à 3, **caractérisé en ce qu'**il se présente sous forme de concentré, qui contient
a) de 0,2 à 200 g/l d'acide phosphorique et/ou au moins d'un acide fluoré d'un ou plusieurs éléments du groupe Zr, Ti, Hf et Si ou respectivement de leurs anions, ainsi que
b) de 0,5 à 200 g/l d'un des copolymères mentionnés de vinylpyrrolidone.

5. Agent selon une ou plusieurs des revendications 1 à 3, **caractérisé en ce qu'**il se présente sous forme de solution d'application prête à l'emploi, qui contient
a) de 0,02 à 20 g/l d'acide phosphorique et/ou au moins d'un acide fluoré d'un ou plusieurs éléments du groupe Zr, Ti, Hf et Si ou respectivement de leurs anions, ainsi que
b) de 0,05 à 20 g/l d'un des copolymères mentionnés de vinylpyrrolidone.

6. Agent selon la revendication 5, **caractérisé en ce qu'**il présente un pH allant de 1 à 6.

7. Procédé de traitement de surfaces métalliques, **caractérisé en ce qu'**on met les surfaces métalliques, qui si on le désire peuvent déjà porter une couche de protection contre la corrosion, en contact avec un agent selon l'une ou l'autre des revendications 5 et 6, ou les deux.

8. Procédé selon la revendication 7, **caractérisé en ce qu'**on met la surface métallique, après un traitement de conversion, en contact avec l'une des revendications 5 et 6, ou les deux.

9. Procédé selon la revendication 7, **caractérisé en ce qu'**on met la surface métallique en contact avec un agent selon l'une des revendications 5 et 6, ou les deux, tandis qu'on la soumet à un traitement de conversion.
